# EUROPEAN PATENT APPLICATION

(11) **EP 4 804 064 A1**
(43) Date of publication of application: **09.09.2026**
(21) Application number: 24885362.4
(22) Date of filing: 03.10.2024
(51) Int. Cl.: G06F 21/55, B60R 16/023

(54) **VEHICLE SECURITY ANALYSIS SYSTEM, VEHICLE SECURITY ANALYSIS METHOD, AND PROGRAM**

(30) Priority: 31.10.2023 JP 2023186501
(71) Applicant: NTT Security (Japan) KK, Tokyo 101-0021 (JP)
(72) Inventor: CHIBA, Yasunobu, Tokyo 101-0021 (JP); NAKAMURA, Manabu, Tokyo 101-0021 (JP); UENO, Wataru, Tokyo 101-0021 (JP); TANAKA, Masashi, Tokyo 101-0021 (JP); NAKATA, Kensuke, Tokyo 101-0021 (JP)
(74) Representative: Murgitroyd & Company
(86) International application number: PCT/JP2024/035488
(87) International publication number: WO 2025/094587

(57) **Abstract**

A vehicle security analysis system includes an acquisition unit configured to acquire sensor log data relating to an in-vehicle device mounted on a vehicle; an analysis unit configured to selectively analyze the sensor log data required to be analyzed, among the sensor log data acquired by the acquisition unit, based on analysis determination information corresponding to the vehicle; and an output unit configured to output an analysis result obtained by the analysis unit.

## Description

### TECHNICAL FIELD

The present invention relates to a vehicle security analysis system, a vehicle security analysis method, and a program.

### BACKGROUND ART

In order to detect a cyber attack or the like on a vehicle, such as an automobile or the like, there is a vehicle security analysis system configured to acquire and analyze sensor log data relating to an in-vehicle device mounted on the vehicle.

In an in-vehicle security device in a vehicle including a predetermined device, a technique of extracting log information of the predetermined device relating to attack information indicating a cyber attack on the predetermined device and transmitting the extracted log information to an anti-attack device is known (see, for example, Patent Document 1).

### RELATED ART DOCUMENTS

### PATENT DOCUMENTS

Patent Document 1: Japanese Patent Application Publication No. 2022-089097

### SUMMARY OF THE INVENTION

### PROBLEMS TO BE SOLVED BY THE INVENTION

In a vehicle security analysis system configured to acquire and analyze sensor log data relating to an in-vehicle device mounted on a vehicle, there is a problem that the cost for analysis processing of the sensor log data is high. A main reason for the high cost is because many resources are required for the analysis processing of analyzing the acquired sensor log data.

According to the technique disclosed in Patent Document 1, it is possible to reduce the amount of sensor log data transmitted to an anti-attack device from an in-vehicle security device mounted on a vehicle. However, this method cannot solve the above problem when an analysis target vehicle does not include the in-vehicle security device.

Also, it is conceivable to perform the technique disclosed in Patent Document 1 on a vehicle security analysis device side. In this case, however, the vehicle security analysis device needs to manage attack information on in-vehicle devices of a plurality of vehicles, sensor log information, and the like, in the in-vehicle devices.

As described above, in a vehicle security analysis system configured to acquire and analyze sensor log data relating to in-vehicle devices mounted on vehicles, there has been difficulty in reducing the resources required for analysis processing of analyzing sensor log data.

An embodiment of the present invention has been made in view of the above problem, and it is possible to readily reduce the resources required for analysis processing of sensor log data in a vehicle security analysis system configured to acquire and analyze sensor log data relating to in-vehicle devices mounted on vehicles.

### MEANS FOR SOLVING THE PROBLEMS

In order to solve the above problem, a vehicle security analysis system according to an embodiment of the present invention includes: an acquisition unit configured to acquire sensor log data relating to an in-vehicle device mounted on a vehicle; an analysis unit configured to selectively analyze the sensor log data required to be analyzed, among the sensor log data acquired by the acquisition unit, based on analysis determination information corresponding to the vehicle; and an output unit configured to output an analysis result obtained by the analysis unit.

### ADVANTAGEOUS EFFECTS OF THE INVENTION

According to an embodiment of the present invention, in a vehicle security analysis system configured to acquire and analyze sensor log data relating to an in-vehicle device mounted on a vehicle, resources required for analysis processing of sensor log data can be readily reduced.

### BRIEF DESCRIPTION OF THE DRAWINGS

[FIG. 1] FIG. 1 is a diagram illustrating an example of a configuration of a vehicle security analysis system according to the present embodiment.
[FIG. 2] FIG. 2 is a diagram for explaining an example of analysis processing according to the present embodiment.
[FIG. 3] FIG. 3 is a diagram illustrating an example of a hardware configuration of a computer according to the present embodiment.
[FIG. 4] FIG. 4 is a diagram illustrating an example of a functional configuration of an SOC server according to the present embodiment.
[FIG. 5] FIG. 5 is a diagram illustrating an image of an example of log data according to the present embodiment.
[FIG. 6] FIG. 6 is a diagram illustrating an image of an example of an analysis logic DB according to the present embodiment.
[FIG. 7A] FIG. 7A is a diagram (1) illustrating an example of analysis determination information according to a first embodiment.
[FIG. 7B] FIG. 7B is a diagram (2) illustrating an example of analysis determination information according to the first embodiment.
[FIG. 8] FIG. 8 is a flowchart illustrating an example of processing of an SOC server according to the first embodiment.
[FIG. 9] FIG. 9 is a flowchart illustrating an example of management processing according to the first embodiment.
[FIG. 10] FIG. 10 is a flowchart illustrating an example of determination processing according to the first embodiment.
[FIG. 11] FIG. 11 is a flowchart illustrating an example of analysis processing according to the first embodiment.
[FIG. 12] FIG. 12 is a diagram illustrating an image of an example of analysis determination information according to a second embodiment.
[FIG. 13] FIG. 13 is a flowchart illustrating an example of management processing according to the second embodiment.
[FIG. 14] FIG. 14 is a flowchart illustrating an example of determination processing according to the second embodiment.
[FIG. 15] FIG. 15 is a diagram illustrating another example of analysis determination information and a determination method according to the present embodiment.
[FIG. 16] FIG. 16 is a flowchart illustrating an example of determination processing according to a third embodiment.

### DETAILED DESCRIPTION OF THE INVENTION

Hereinafter, embodiments of the present invention (the present embodiments) will be described with reference to the drawings. Note that the embodiments described below are merely examples, and embodiments to which the present invention is applied are not limited to the following embodiments.

### <System Configuration>

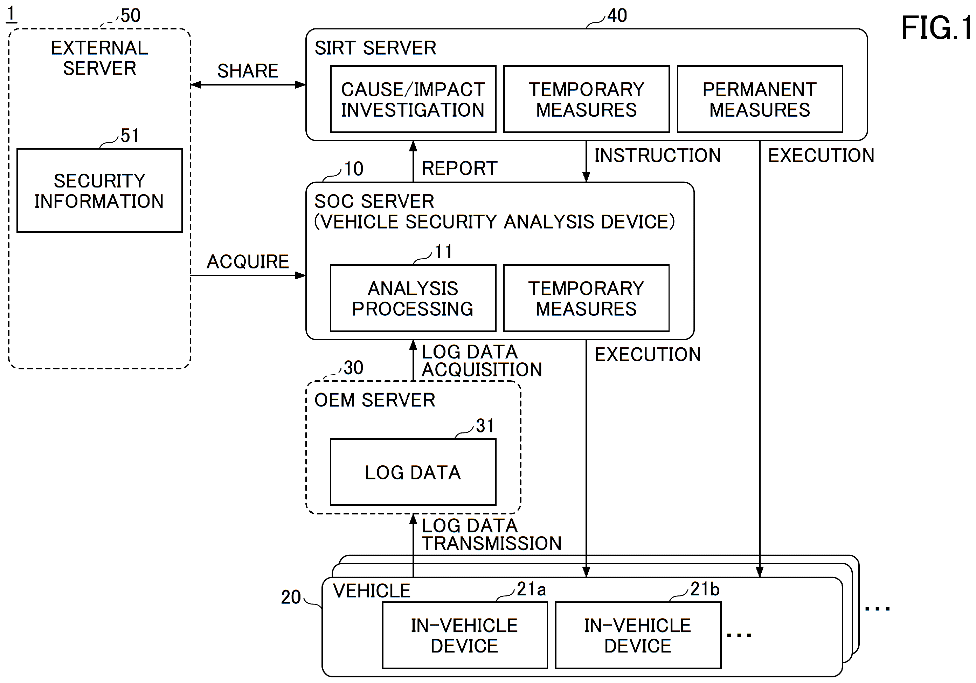

FIG. 1 is a diagram illustrating an example of a configuration of a vehicle security analysis system according to the present embodiment. A vehicle security analysis system 1 includes, for example, an SOC (Security Operation Center) server 10 and an SIRT (Security Incident Response Team) server 40, which can communicate with each other via a communication network.

The SOC server (vehicle security analysis device) 10 is, for example, an information processing device having a configuration of a computer, or a system including a plurality of computers. The SOC server 10 is an example of a vehicle security analysis device configured to acquire and analyze sensor log data relating to in-vehicle devices 21a, 21b, ... mounted on a vehicle 20 in order to detect a cyber attack (hereinafter referred to simply as an "attack") on the vehicle 20, such as an automobile or the like. In the following description, an "in-vehicle device 21" is used to indicate a given in-vehicle device among the in-vehicle devices 21a, 21b, ..., etc.

The SOC server 10 is configured to execute analysis processing 11 on the acquired sensor log data (hereinafter referred to simply as "log data"), and is configured to, when an attack on the vehicle 20 is detected, transmit a report on the detected attack to the SIRT server 40 or the like.

In the example of FIG. 1, the SOC server 10 acquires log data relating to the in-vehicle device 21 mounted on the vehicle 20 from an OEM (Original Equipment Manufacturing) server 30 or the like, which is configured to collect log data 31 from one or more vehicles 20. However, this is by no means a limitation. The SOC server 10 may acquire log data relating to the in-vehicle device 21 mounted on the vehicle 20 from one or more vehicles 20 without the OEM server 30.

Also, the SOC server 10 can acquire security information 51 via a communication network, such as the Internet or the like, from an external server 50 operated, for example, by Auto-ISAC (Automotive Information Sharing and Analysis Center). This security information 51 includes, for example, various cybersecurity information, such as, for example, cyberthreats and potential vulnerabilities relating to connected cars. The SOC server 10 may detect an attack on the vehicle 20 based on the acquired log data 31 and security information 51.

Also, the SOC server 10 may have a function of executing a temporary measure to the vehicle 20, for example, based on the acquired security information 51 or an instruction from the SIRT server 40 when an attack on the vehicle 20 is detected.

The SIRT server 40 is an information processing device having a configuration of a computer, or a system including a plurality of computers. The SIRT server 40 is, for example, a server operated by an organization (SIRT) that performs security responses to external threats that can threaten the safety of products manufactured and sold by vehicle manufacturers, in-vehicle device manufacturers, or the like, in order to ensure the safety of their products. The SIRT is also referred to as a PSIRT (Product Security Incident Response Team) or a CSIRT (Computer Security Incident Response Team).

The SIRT server 40 has a function of performing a permanent measure including a response policy to the vehicle 20, for example, when the response policy or the like determined for each manufacturer is input based on a report transmitted from the SOC server 10. Also, the SIRT server 40 may have a function of sharing the security information 51 with the external server 50 and instructing the SOC server 10 or the vehicle 20 to perform a temporary measure to the vehicle 20 based on the security information 51.

### (Example of Analysis Processing)

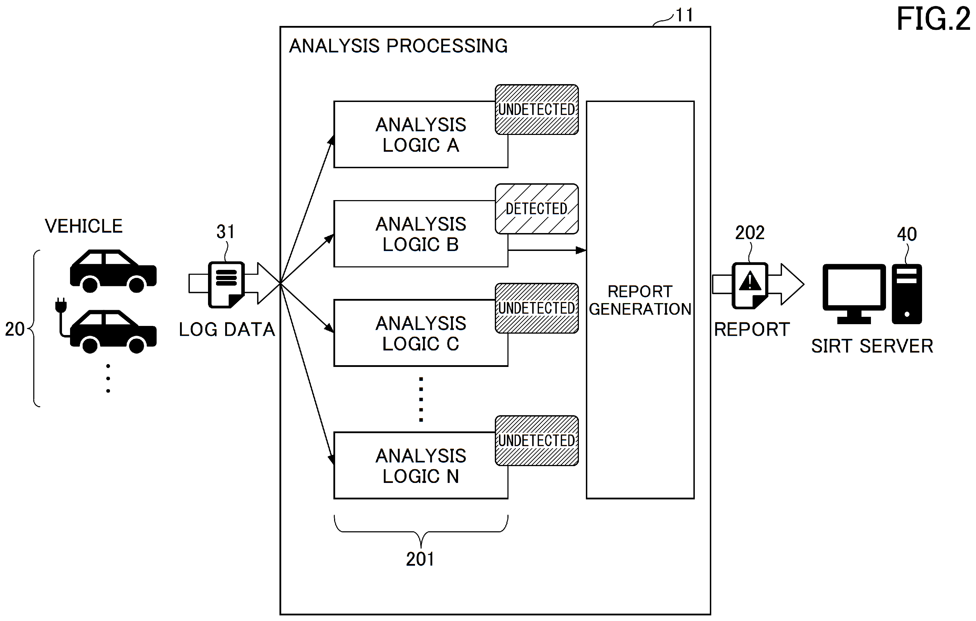

FIG. 2 is a diagram for explaining an example of analysis processing according to the present embodiment. The SOC server 10 executes, for example, analysis processing 11 of executing a plurality of analysis logics 201 on the log data 31 relating to the in-vehicle device 21 mounted on the vehicle 20.

The plurality of analysis logics 201 are described for each attack to be detected. For example, when an attack is detected by an analysis logic B among the plurality of analysis logics 201 through the analysis processing 11, the SOC server 10 can identify the detected attack based on description contents of the analysis logic B. Preferably, the SOC server 10 generates a report 202 including information of the detected attack, and outputs the generated report 202 to a predetermined output destination, such as the SIRT server 40 or the like.

In this manner, the vehicle security analysis system 1 has a problem that many resources (computing resources), such as a CPU (Central Processing Unit), a memory, and the like, are consumed in order to execute a large number of analysis logics on analysis target log data.

In order to solve the above problem, according to the technique disclosed in Patent Document 1, the in-vehicle security device extracts log information of a predetermined device relating to attack information indicating a cyber attack on the predetermined device, and transmits the extracted log information to a predetermined transmission destination. However, this method cannot solve the problem when the analysis target vehicle does not include the in-vehicle security device.

Also, it is conceivable to perform the technique disclosed in Patent Document 1 on the SOC server 10 side. In this case, however, the SOC server 10 needs to manage attack information on in-vehicle devices of a plurality of vehicles and sensor log information in the in-vehicle devices.

As described above, the conventional technique has difficulty reducing resources required for analysis processing of analyzing log data in the vehicle security analysis system 1 configured to acquire and analyze log data relating to in-vehicle devices mounted on vehicles.

In view of this, the SOC server 10 according to the present embodiment has a function of acquiring log data relating to the in-vehicle device 21 mounted on the vehicle 20, and selectively analyzing the log data required to be analyzed, among the acquired log data, based on the analysis determination information corresponding to the vehicle 20. Thus, the vehicle security analysis system 1 according to the present embodiment can reduce the resources required for the analysis processing of analyzing the log data even if the analysis target vehicle 20 does not include the in-vehicle security device disclosed in Patent Document 1.

Here, the analysis determination information is information for determining whether or not to analyze the acquired log data. The analysis determination information includes, for example, information, such as the number of occurrences of log data, the presence or absence of a sensor log indicating the occurrence of an attack, the state of the vehicle 20, the presence or absence of a known vulnerability, or the like. Specific examples of the analysis determination information will be described below.

Preferably, when the log data is acquired, the SOC server 10 determines whether or not to analyze the acquired log data based on the analysis determination information and the log data. Thus, the vehicle security analysis system 1 according to the present embodiment does not need to manage attack information of the in-vehicle devices of the plurality of vehicles 20, log data of the in-vehicle devices, and the like.

As described above, according to the present embodiment, in the vehicle security analysis system 1 configured to acquire and analyze log data (sensor log data) relating to the in-vehicle device 21 mounted on the vehicle 29, resources required for analysis processing of log data can be readily reduced.

### <Hardware Configuration>

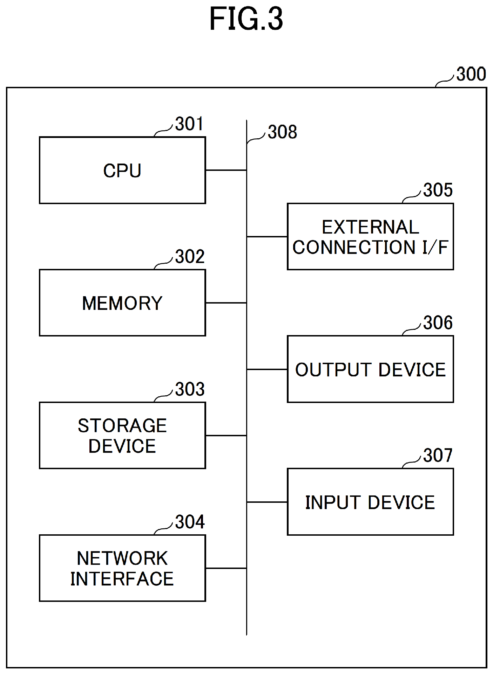

The SOC server 10, the OEM server 30, the SIRT server 40, the external server 50, and the like, described with reference to FIG. 1, have, for example, a hardware configuration of a computer 300 illustrated in FIG. 3. Alternatively, the SOC server 10, the OEM server 30, the SIRT server 40, the external server 50, and the like are configured by a plurality of computers 300.

FIG. 3 is a diagram illustrating an example of the hardware configuration of a computer according to the present embodiment. The computer 300 includes, for example, a CPU (Central Processing Unit) 301, a memory 302, a storage device 303, a network I/F (Interface) 304, an external connection I/F 305, an output device 306, an input device 307, and an internal bus 308.

The CPU 301 is a processor configured to implement various functions by executing a program stored in a storage medium, such as the memory 302, the storage device 303, or the like. The memory 302 includes, for example, a RAM (Random Access Memory), which is a volatile memory used by the CPU 301 as a temporary storage area, and a ROM (Read Only Memory), which is a nonvolatile memory configured to store a program for starting the CPU 301. The storage device 303 is a large-capacity, nonvolatile storage device, such as an SSD (Solid State Drive), an HDD (Hard Disk Drive), or the like. The network I/F 304 includes one or more communication interfaces configured to connect the computer 300 to a communication network.

The external connection I/F 305 is an interface configured to connect an external device to the computer 300. The output device 306 is an output device (e.g., a display, a speaker, or a lamp) configured to perform output to the outside. The input device 307 is an input device (e.g., a keyboard, a mouse, or a microphone) configured to receive an input from the outside. Note that the input device 307 and the output device 306 may be an integrated input/output device (e.g., a touch panel display). The internal bus 308 is connected to each of the above-described components, and configured to transmit an address signal, a data signal, various control signals, and the like.

### <Functional Configuration>

Subsequently, the functional configuration of the vehicle security analysis system 1 according to the present embodiment will be described.

### (Functional Configuration of SOC Server)

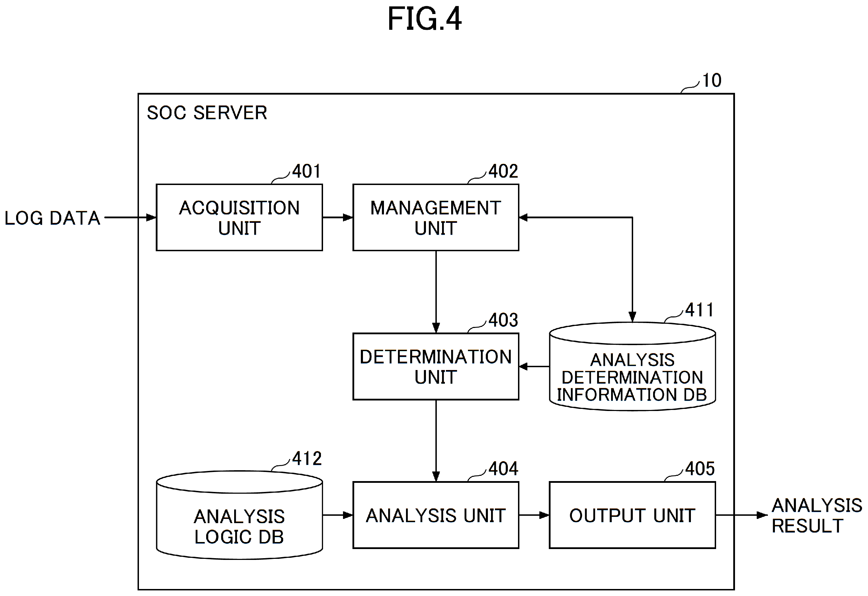

FIG. 4 is a diagram illustrating an example of a functional configuration of an SOC server according to the present embodiment. The SOC server 10 implements, for example, each functional configuration illustrated in FIG. 4 by executing a predetermined program on one or more computers 300 included in the SOC server 10. In the example of FIG. 4, the SOC server 10 includes an acquisition unit 401, a management unit 402, a determination unit 403, an analysis unit 404, an output unit 405, and the like. At least part of the above functional configurations may be implemented by hardware.

As an example, the SOC server 10 stores an analysis determination information DB (Database) 411, an analysis logic DB 412, and the like in a storage unit, such as the storage device 303 or the like illustrated in FIG. 3. As another example, the SOC server 10 may utilize the analysis determination information DB (Database) 411 or the analysis logic DB 412 stored in an external storage server, a cloud storage, or the like.

The acquisition unit 401 is configured to execute acquisition processing of acquiring the log data 31 relating to the in-vehicle device 21 mounted on the vehicle 20. For example, the acquisition unit 401 acquires the log data 31 from an external server, such as the OEM server 30 or the like, via a communication network. However, this is by no means a limitation, The acquisition unit 401 may acquire the log data 31 from the vehicle 20 via a communication network.

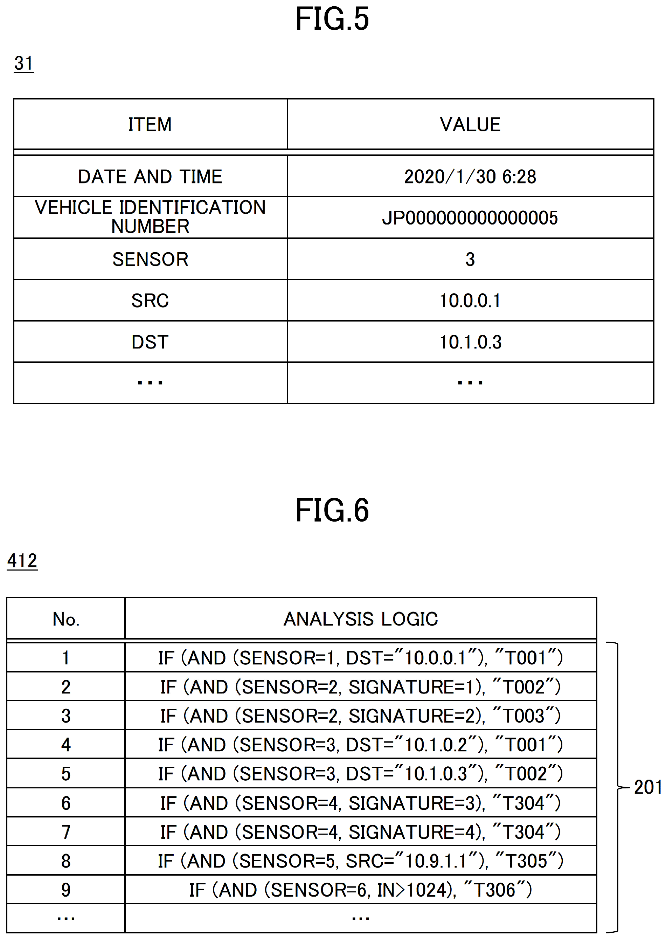

FIG. 5 is a diagram illustrating an example of an image of log data according to the present embodiment. In the example of FIG. 5, the log data 31 includes, as items, information, such as "DATE AND TIME", "VEHICLE IDENTIFICATION NUMBER", "SENSOR", "SRC", "DST", ... etc. The "DATE AND TIME" is, for example, information indicating the date and time when an event causing the log data 31 was detected, the date and time when the log data 31 was generated, or the date and time when the log data 31 was transmitted. The vehicle identification number is identification information, such as a VIN (Vehicle Identification Number) or the like, for identifying the vehicle 20.

"SENSOR", "SRC", "DST", ... etc. are examples of data included in the log data 31. The "SENSOR" is identification information (e.g., a sensor ID) for identifying a plurality of in-vehicle devices 21 mounted on the vehicle 20, a security sensor, or the like. The "SRC" is identification information (e.g., IP address) for identifying a transmission source of the communication that caused the generation of the log data 31. The "DST" is identification information (e.g., IP address) for identifying a transmission destination of the communication that caused the generation of the log data 31. Here, with reference to FIG. 4, the description of the functional configuration of the SOC server 10 will be continued.

The management unit 402 is configured to execute management processing of managing the analysis determination information corresponding to each vehicle 20. For example, the management unit 402 updates, creates, acquires, or the like the analysis determination information. Preferably, the management unit 402 stores and manages the analysis determination information corresponding to each vehicle 20 in association with the vehicle identification number in the analysis determination information DB 411 or the like.

As described above, the analysis determination information is information for determining whether or not to analyze the log data acquired by the acquisition unit 401. The analysis determination information may include, for example, various information, such as the number of occurrences of log data, the presence or absence of a sensor log indicating the occurrence of an attack, the state of the vehicle 20, the presence or absence of a known vulnerability, or the like.

The determination unit 403 is configured to execute determination processing of determining whether or not to analyze the log data 31 acquired by the acquisition unit 401 based on the analysis determination information. Preferably, when the acquisition unit 401 acquires the log data 31, the determination unit 403 determines whether or not to analyze the acquired log data 31 based on the analysis determination information and the acquired log data.

Specific examples of the analysis determination information, and the determination processing executed by the determination unit 403 will be described below in accordance with a plurality of embodiments.

The analysis unit 404 is configured to execute analysis processing of selectively analyzing the log data required to be analyzed, among the log data 31 acquired by the acquisition unit 401, based on the analysis determination information corresponding to the vehicle 20. For example, based on the analysis determination information, the analysis unit 404 analyzes the log data 31 determined to be analyzed by the determination unit 403, and does not analyze the log data 31 determined not to be analyzed by the determination unit 403.

As an example, the analysis unit 404 analyzes the log data 31 determined to be analyzed by the determination unit 403 using the analysis logic DB 412 illustrated in FIG. 6.

FIG. 6 is a diagram illustrating an image of an example of the analysis logic DB according to the present embodiment. As illustrated in FIG. 6, a plurality of analysis logics 201 are previously registered in the analysis logic DB 412. The analysis unit 404 analyzes the analysis target log data 31 by executing the plurality of analysis logics 201 on the log data 31 determined to be analyzed by the determination unit 403.

As described above, the plurality of analysis logics 201 are described for each attack to be detected. For example, an analysis logic of No. 1 indicates that, when a value of "SENSOR" of the log data 31 is "1" and a value of "DST" is "10.0.0.1", an attack is "T001". Here, the "T001" is identification information (e.g., an attack ID) for identifying an attack.

Also, an analysis logic of No. 2 indicates that, when a value of "SENSOR" of the log data 31 is "2" and a value of "SIGNATURE" is "1", an attack is "T002". Here, the "SIGNATURE" is identification information (e.g., a signature ID) for identifying a signature, which is data used for detecting malware, a specific communication pattern, a specific file, or the like.

The analysis unit 404 executes a plurality of analysis logics 201 on the log data 31 determined to be analyzed by the determination unit 403, and, when an attack is detected, outputs information relating to the detected attack as an analysis result.

The above-described method of analyzing the log data 31 by the analysis unit 404 is an example. In the present embodiment, the method of analyzing the log data 31 by the analysis unit 404 may be any other method.

The output unit 405 executes output processing of outputting the analysis result, obtained by the analysis unit 404, to a predetermined output destination. For example, the output unit 405 transmits the analysis result (e.g., the report 202), obtained by the analysis unit 404, to the SIRT server 40. Note that the report 202 may be generated by the output unit 405 based on the analysis result obtained by the analysis unit 404.

Note that the functional configuration of the SOC server 10 illustrated in FIG. 4 is an example. For example, the functional configuration of the SOC server 10 illustrated in FIG. 4 may be distributed to a plurality of devices. In this case, the functional configuration of the SOC server 10 illustrated in FIG. 4 may be included in any of the devices included in the vehicle security analysis system 1.

Also, when the analysis determination information created or acquired by the management unit 402 is information that does not need to be retained, the SOC server 10 (or the vehicle security analysis system 1) does not necessarily need to include the analysis determination information DB 411. Further, the management unit 402 may acquire analysis determination information (e.g., the security information 51), not being based on the log data 31, from the external server 50 or the like, and manage the acquired analysis determination information.

### [First Embodiment]

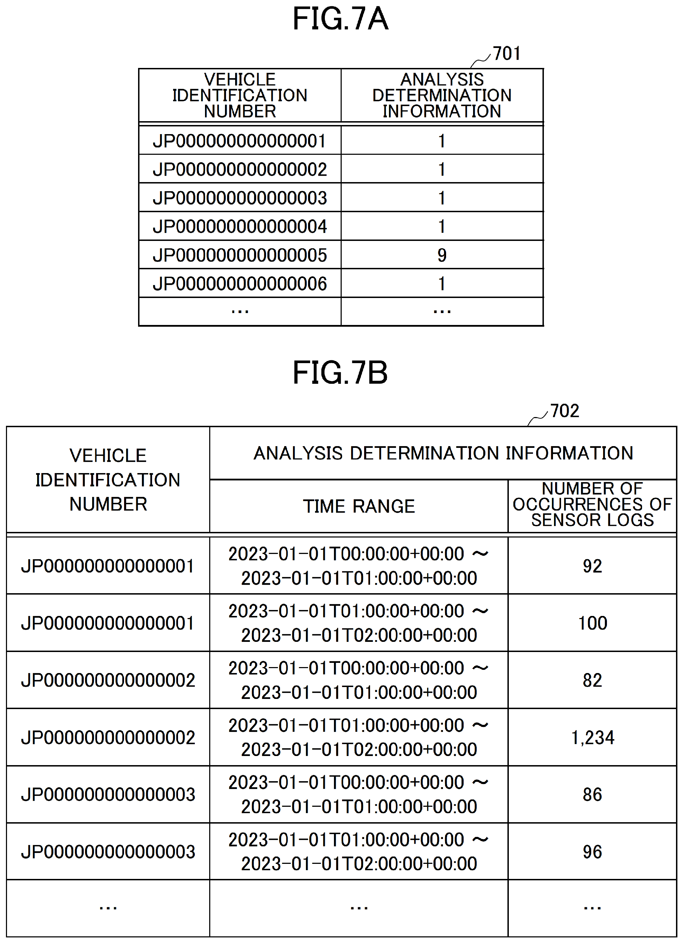

FIGS. 7A and 7B are diagrams illustrating an example of analysis determination information according to a first embodiment. FIG. 7A is an image of an example of analysis determination information according to the first embodiment. For example, as illustrated in FIG. 7A, the management unit 402 manages analysis determination information 701 of each vehicle 20 in association with the vehicle identification numbers of the plurality of vehicles 20. FIG. 7A is an example in which the analysis determination information 701 is a count value for counting a predetermined event in each vehicle 20.

FIG. 7B is an example of the analysis determination information 702 when the predetermined event is the number of sensor logs (log data 31) occurring within a predetermined period. For example, when the acquisition unit 401 acquires the log data 31 illustrated in FIG. 5, the management unit 402 adds one to the "NUMBER OF OCCURRENCES OF SENSOR LOGS", corresponding to the vehicle identification number in the analysis determination information 702 illustrated in FIG. 7B, based on the "DATE AND TIME" and the "VEHICLE IDENTIFICATION NUMBER" included in the log data 31.

Also, when the "NUMBER OF OCCURRENCES OF SENSOR LOGS" corresponding to the vehicle identification number in the analysis determination information 702 illustrated in FIG. 7B reaches (or exceeds) a predetermined threshold, the determination unit 403 determines to analyze the log data 31 acquired by the acquisition unit 401.

As another example, the management unit 402 may manage the amount of log data generated within a predetermined period as the analysis determination information for each vehicle identification number. In this case, when the amount of the log data 31 corresponding to the vehicle identification number reaches (or exceeds) a predetermined threshold, the determination unit 403 may determine to analyze the log data 31 acquired by the acquisition unit 401.

### <Flow of Processing>

Subsequently, a flow of processing of a vehicle security analysis method according to the first embodiment will be described.

### (Processing of SOC Server)

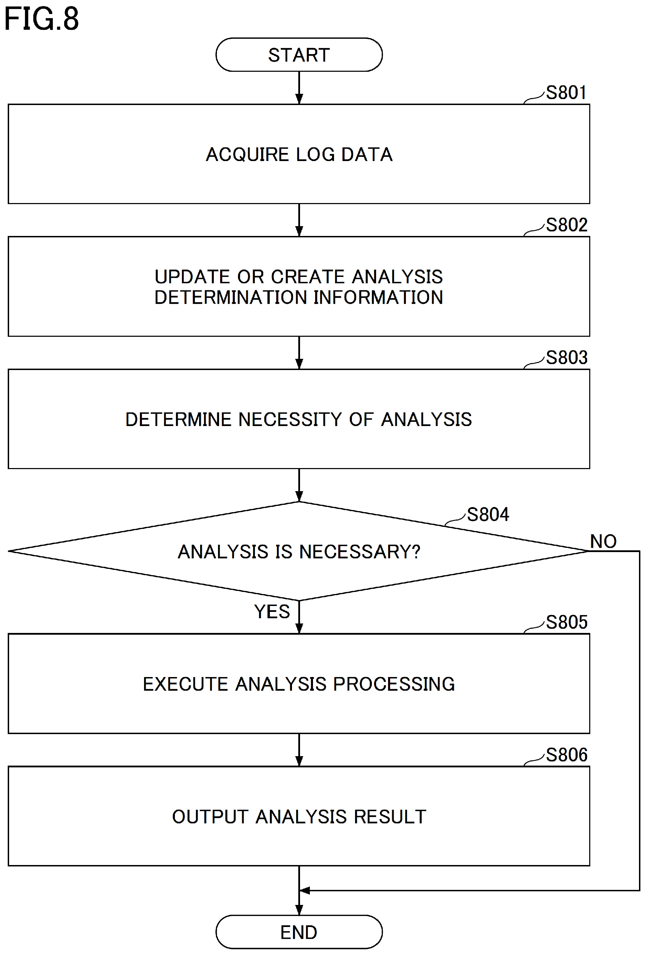

FIG. 8 is a flowchart illustrating an example of processing of the SOC server according to the first embodiment. This processing illustrates, for example, an outline of the processing executed by the SOC server 10, which has the functional configuration illustrated in FIG. 4.

In step S801, the acquisition unit 401 acquires, for example, the log data 31 illustrated in FIG. 5 from the OEM server 30 or the like.

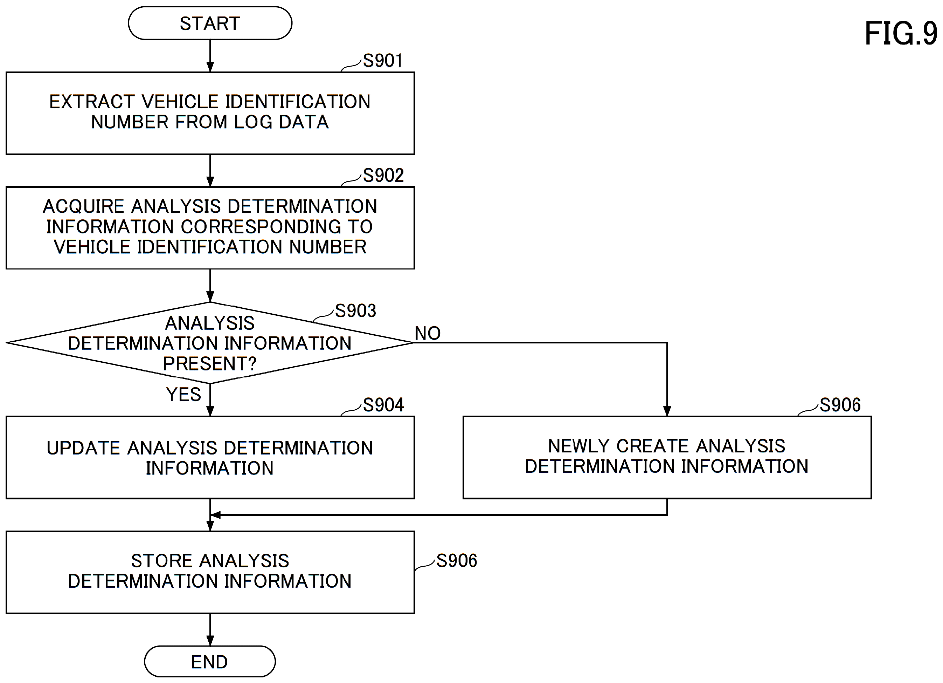

In step S802, when the acquisition unit 401 acquires the log data 31, the management unit 402 updates or creates, for example, analysis determination information illustrated in FIG. 7A or 7B based on the acquired log data 31. As a specific example, the management unit 402 executes the management processing illustrated in FIG. 9.

FIG. 9 is a flowchart illustrating an example of management processing according to the first embodiment. This processing illustrates an example of management processing executed by the management unit 402 in step S802 of FIG. 8.

In step S901, the management unit 402 extracts a vehicle identification number from the log data 31 acquired by the acquisition unit 401. For example, when the log data 31 acquired by the acquisition unit 401 is the log data 31 illustrated in FIG. 5, the acquisition unit 401 extracts a vehicle identification number of "JP000000000000005".

In step S902, the management unit 402 acquires analysis determination information corresponding to the extracted vehicle identification number. For example, the management unit 402 acquires analysis determination information of "9" corresponding to the vehicle identification number of "JP000000000000005" from the analysis determination information illustrated in FIG. 7A.

In step S903, the management unit 402 determines whether or not analysis determination information is present. For example, when the management unit 402 can acquire analysis determination information corresponding to the vehicle identification number, the management unit 402 determines that analysis determination information is present. When analysis determination information is present, the management unit 402 moves the processing to step S904. Conversely, when analysis determination information is absent, the management unit 402 moves the processing to step S905.

In step S904, the management unit 402 updates the analysis determination information. For example, in FIG. 7A, it is assumed that the analysis determination information is the number of occurrences of the log data 31. In this case, the management unit 402 adds one to the analysis determination information of "9" corresponding to the vehicle identification number of "JP000000000000005", thereby performing an update to "10".

In step S905, the management unit 402 newly creates analysis determination information. For example, in FIG. 7A, when the analysis determination information corresponding to the vehicle identification number of "JP000000000000005" is not registered, the management unit 402 determines that analysis determination information is absent. In this case, the management unit 402 newly creates analysis determination information of "1", which indicates that the number of occurrences of the log data 31 is one.

In step S906, the management unit 402 stores the updated or newly created analysis determination information in the analysis determination information DB 411 or the like.

When the analysis determination information is the analysis determination information illustrated in FIG. 7B, the management unit 402 updates or newly creates the analysis determination information for the analysis determination information corresponding to the "DATE AND TIME" of the log data 31 among the analysis determination information corresponding to the vehicle identification number.

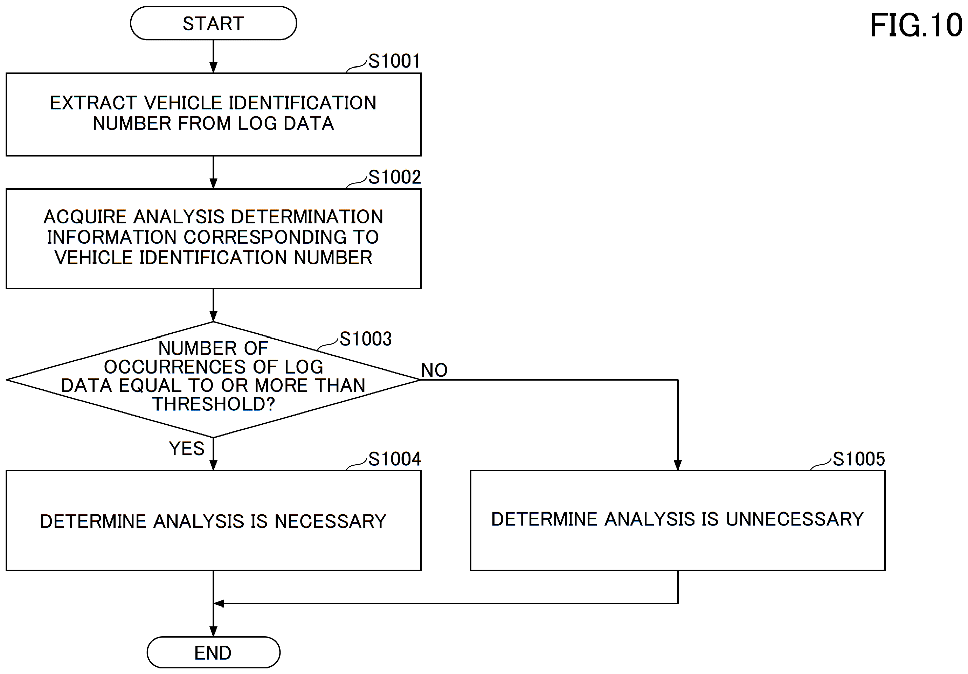

Here, with reference to FIG. 8, the description of the processing of the SOC server will be continued. In step S803, the determination unit 403 determines whether or not analysis of the log data 31 acquired by the acquisition unit 401 is necessary based on the analysis determination information corresponding to the vehicle 20. As a specific example, the determination unit 403 executes determination processing illustrated in FIG. 10.

FIG. 10 is a flowchart illustrating an example of determination processing according to the first embodiment. This processing illustrates an example of determination processing executed by the determination unit 403 in step S803 of FIG. 8.

In step S1001, the determination unit 403 extracts a vehicle identification number from the log data 31 acquired by the acquisition unit 401. Note that the determination unit 403 may acquire the log data 31, acquired by the acquisition unit 401, from the management unit 402 or from the acquisition unit 401.

In step S1002, the determination unit 403 acquires analysis determination information corresponding to the extracted vehicle identification number. For example, the determination unit 403 acquires analysis determination information corresponding to the vehicle identification number from the analysis determination information as illustrated in FIG. 7A. Here, the acquired analysis determination information indicates the number of occurrences of log data in the vehicle 20 corresponding to the vehicle identification number.

In step S1003, the determination unit 403 determines whether or not the number of occurrences of the log data indicated by the acquired analysis determination information is equal to or more than a predetermined threshold. Here, the threshold is assumed to be a predetermined number of occurrences of the log data for determining that analysis of the log data 31 is necessary.

When the number of occurrences of the log data 31 is equal to or more than the threshold, the determination unit 403 moves the processing to step S1004. Conversely, when the number of occurrences of the log data 31 is less than the threshold, the determination unit 403 moves the processing to step S1005.

In step S1004, the determination unit 403 determines that analysis of the log data 31 acquired by the acquisition unit 401 is necessary. In step S1005, the determination unit 403 determines that analysis of the log data 31 acquired by the acquisition unit 401 is unnecessary.

Here, with reference to FIG. 8, the description of the processing of the SOC server will be continued. In step S804, when determining that analysis of the log data 31 acquired by the acquisition unit 401 is necessary, the determination unit 403 moves the processing to step S805. Conversely, when determining that analysis of the log data 31 acquired by the acquisition unit 401 is unnecessary, the determination unit 403 ends the processing of FIG. 8.

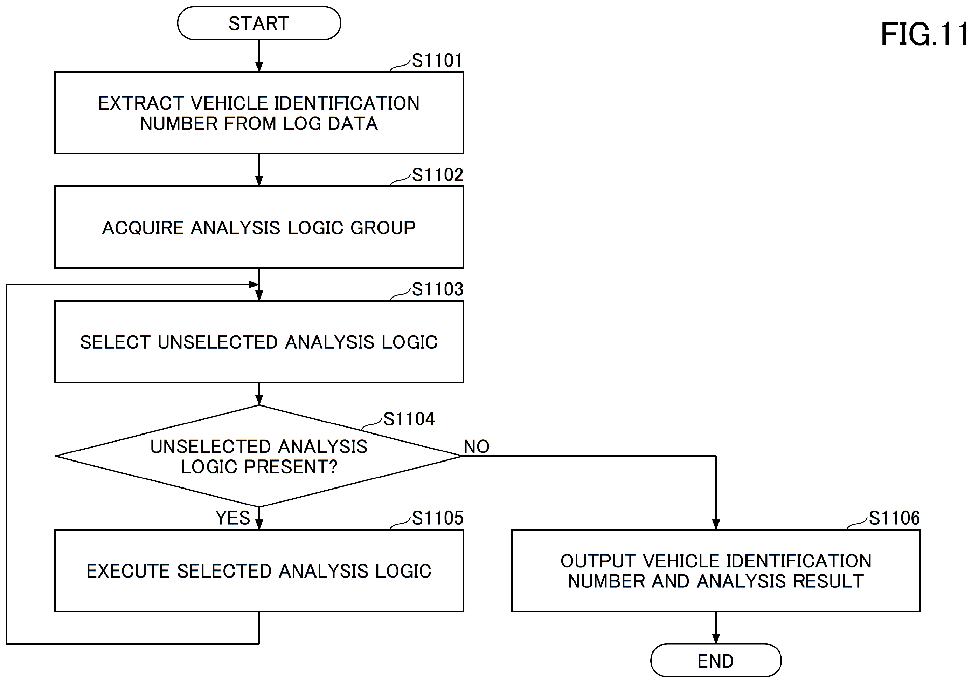

In step S805, the analysis unit 404 executes analysis processing of analyzing the log data 31 acquired by the acquisition unit 401. As a specific example, the analysis unit 404 executes analysis processing illustrated in FIG. 11.

FIG. 11 is a flowchart illustrating an example of analysis processing according to the first embodiment. This processing illustrates an example of analysis processing executed by the analysis unit 404 in step S805 of FIG. 8.

In step S1101, the analysis unit 404 extracts a vehicle identification number from log data acquired by the acquisition unit 401.

In step S1102, the analysis unit 404 acquires, for example, an analysis logic group (a plurality of analysis logics 201) from the analysis logic DB 412 illustrated in FIG. 6.

In step S1103, the analysis unit 404 selects an unselected analysis logic from the acquired analysis logic group.

In step S1104, the analysis unit 404 determines whether or not an unselected analysis logic is present. For example, when the analysis unit 404 can select an unselected analysis logic in step S1103, the analysis unit 404 determines that an unselected analysis logic is present. When an unselected analysis logic is present, the analysis unit 404 executes the selected analysis logic. Conversely, when an unselected analysis logic is absent, the analysis unit 404 moves the processing to step S1106.

In step S1105, the analysis unit 404 executes the selected analysis logic on the log data 31, and returns the processing to step S1103. Through the processing of steps S1103 to S1105, the analysis unit 404 executes, for example, all analysis logics included in the acquired analysis logic group on the log data 31 acquired by the acquisition unit 401.

In step S1106, the analysis unit 404 outputs, to the output unit, the vehicle identification number extracted from the log data 31 acquired by the acquisition unit 401 and the analysis result obtained through analysis in steps S1103 to S1105. This analysis result includes, for example, information (e.g., an attack ID) for identifying an attack detected by the analysis logic group.

Here, with reference to FIG. 8, the processing of the SOC server will be further described. In step S806, the output unit 405 outputs the analysis result obtained by the analysis unit 404 to a predetermined output destination. For example, the output unit 405 generates the report 202 including the information of the attack detected through the analysis processing 11 executed by the analysis unit 404 and the vehicle identification number of the vehicle 20 in which the attack was detected, and transmits the generated report 202 to the SIRT server 40. Note that the generation of the report 202 may be performed through the analysis processing 11 executed by the analysis unit 404, as described with reference to FIG. 2.

In the first embodiment, since no analysis is executed on the log data 31 of the vehicle 20 in which the number of occurrences of the log data 31 is less than the threshold, computing resources consumed by the analysis processing 11 can be readily reduced.

### [Second Embodiment]

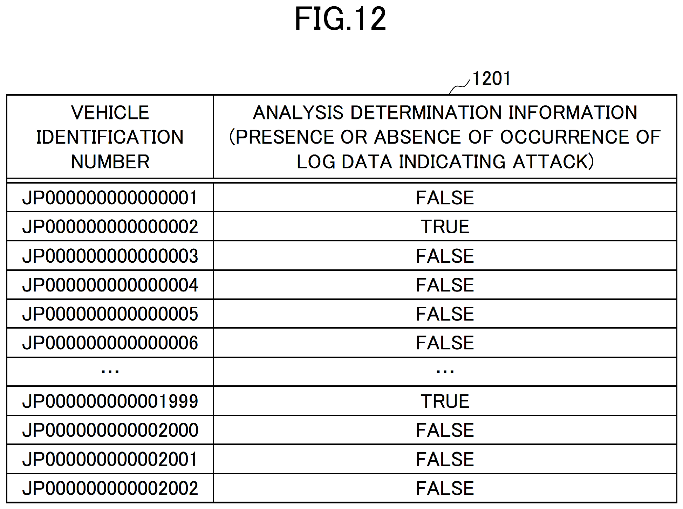

FIG. 12 is a diagram illustrating an image of an example of analysis determination information according to the second embodiment. As illustrated in FIG. 12, the management unit 402 according to the second embodiment manages, as analysis determination information 1201, information indicating the presence or absence of the occurrence of the log data 31 indicating an attack, in association with vehicle identification numbers of a plurality of vehicles 20.

In FIG. 12, "FALSE" of the analysis determination information 1201 indicates that the log data 31 strongly indicating an attack has not been detected in the vehicle 20 corresponding to the vehicle identification number. Conversely, "TRUE" of the analysis determination information 1201 indicates that the log data 31 strongly indicating an attack has been detected in the vehicle 20 corresponding to the vehicle identification number.

### <Flow of Processing>

Subsequently, a flow of processing of a vehicle security analysis method according to the second embodiment will be described. Note that the processing of the SOC server according to the second embodiment may be the same as the processing of the SOC server according to the first embodiment described with reference to FIG. 8. Also, the analysis processing according to the second embodiment may be the same as the analysis processing according to the first embodiment described with reference to FIG. 11.

### (Management Processing)

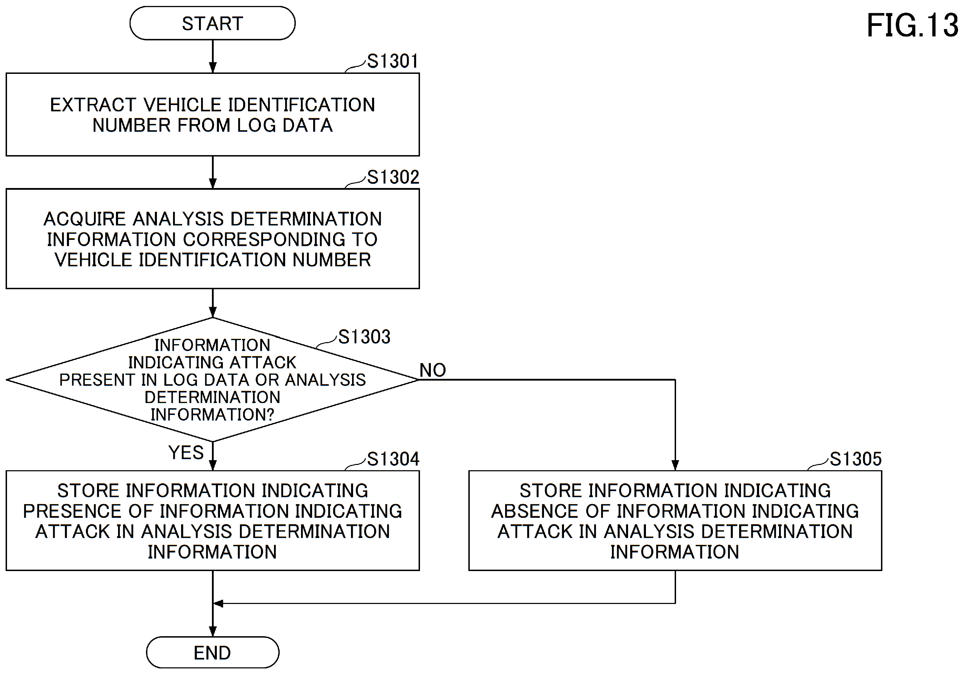

FIG. 13 is a flowchart illustrating an example of management processing according to the second embodiment. This processing illustrates an example of management processing executed by the management unit 402 in step S802 of FIG. 8. Here, a detailed description of contents of the processing similar to the management processing according to the first embodiment described with reference to FIG. 9 is omitted.

In step S1301, the management unit 402 extracts a vehicle identification number from the log data 31 acquired by the acquisition unit 401.

In step S1302, the management unit 402 acquires analysis determination information corresponding to the extracted vehicle identification number. For example, the management unit 402 acquires analysis determination information corresponding to the extracted vehicle identification number from the analysis determination information 1201 illustrated in FIG. 12.

In step S1303, the management unit 402 determines whether or not the log data 31 acquired by the acquisition unit 401 or the acquired analysis determination information includes information indicating an attack on the vehicle 20. For example, when the log data 31 acquired by the acquisition unit 401 includes information indicating an attack on the vehicle 20 and/or the acquired analysis determination information is "TRUE", the management unit 402 determines that information indicating an attack is present. Conversely, when the log data 31 acquired by the acquisition unit 401 does not include information indicating an attack on the vehicle 20 and the acquired analysis determination information is "FALSE", the management unit 402 determines that information indicating an attack is absent.

When information indicating an attack is present, the management unit 402 moves the processing to step S1304. Conversely, when information indicating an attack is absent, the management unit 402 moves the processing to step S1305.

In step S1304, the management unit 402 stores information indicating that there has been information indicating an attack on the vehicle 20 ("TRUE" in the example of FIG. 12) in the analysis determination information 1201 corresponding to the vehicle identification number of the vehicle 20.

In step S1305, the management unit 402 stores information indicating that there has not been information indicating an attack on the vehicle 20 ("FALSE" in the example of FIG. 12) in the analysis determination information 1201 corresponding to the vehicle identification number of the vehicle 20. Note that the management unit 402 may omit the processing of step S1305, and maintain the analysis determination information corresponding to the vehicle identification number of the vehicle 20.

Through the processing of FIG. 13, the management unit 402 can store and manage, for example, the analysis determination information illustrated in FIG. 12 in the analysis determination information DB 411 or the like.

### (Determination Processing)

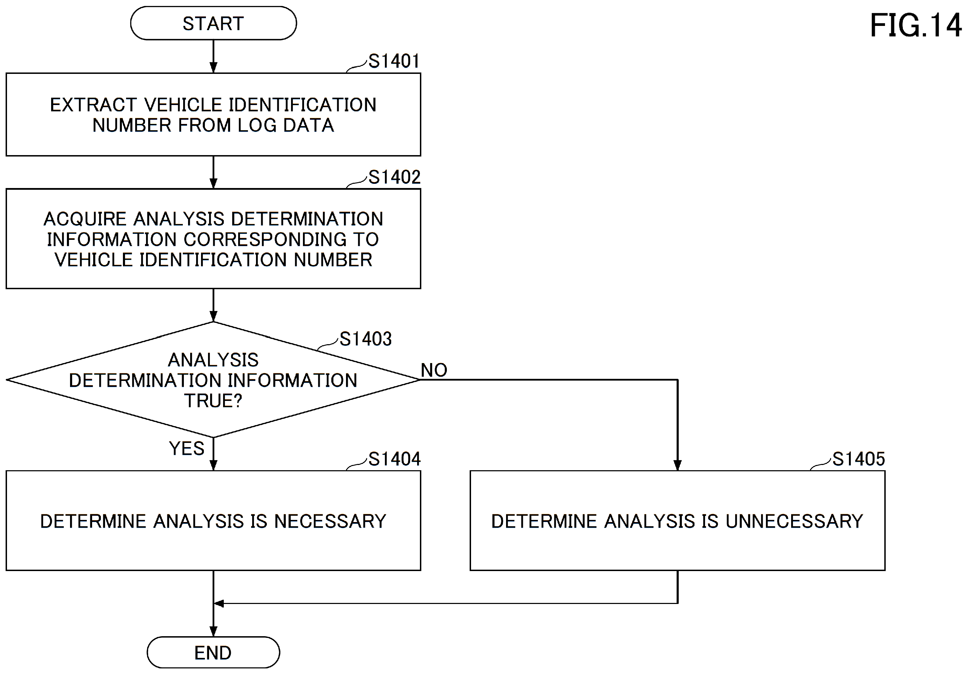

FIG. 14 is a flowchart illustrating an example of determination processing according to the second embodiment. This processing illustrates an example of determination processing executed by the determination unit 403 in step S803 of FIG. 8. Here, a detailed description of contents of the processing similar to the determination processing according to the first embodiment described with reference to FIG. 10 is omitted.

In step S1401, the determination unit 403 extracts a vehicle identification number from the log data 31 acquired by the acquisition unit 401.

In step S1402, the determination unit 403 acquires analysis determination information corresponding to the extracted vehicle identification number. For example, the determination unit 403 acquires the analysis determination information corresponding to the extracted vehicle identification number from the analysis determination information 1201 illustrated in FIG. 12.

In step S1403, the determination unit 403 determines whether or not the acquired analysis determination information is "TRUE". When the acquired analysis determination information is "TRUE", the determination unit 403 moves the processing to step S1404. Conversely, when the acquired analysis determination information is not "TRUE" (is "FALSE"), the determination unit 403 moves the processing to step S1405.

In step S1404, the determination unit 403 determines that analysis of the log data 31 acquired by the acquisition unit 401 is necessary. In step S1405, the determination unit 403 determines that analysis of the log data 31 acquired by the acquisition unit 401 is unnecessary.

In the second embodiment, since no analysis is executed on the log data 31 of the vehicle 20 in which information indicating an attack has not been detected, computing resources consumed by the analysis processing 11 can be readily reduced.

### (Examples of Other Analysis Determination Information)

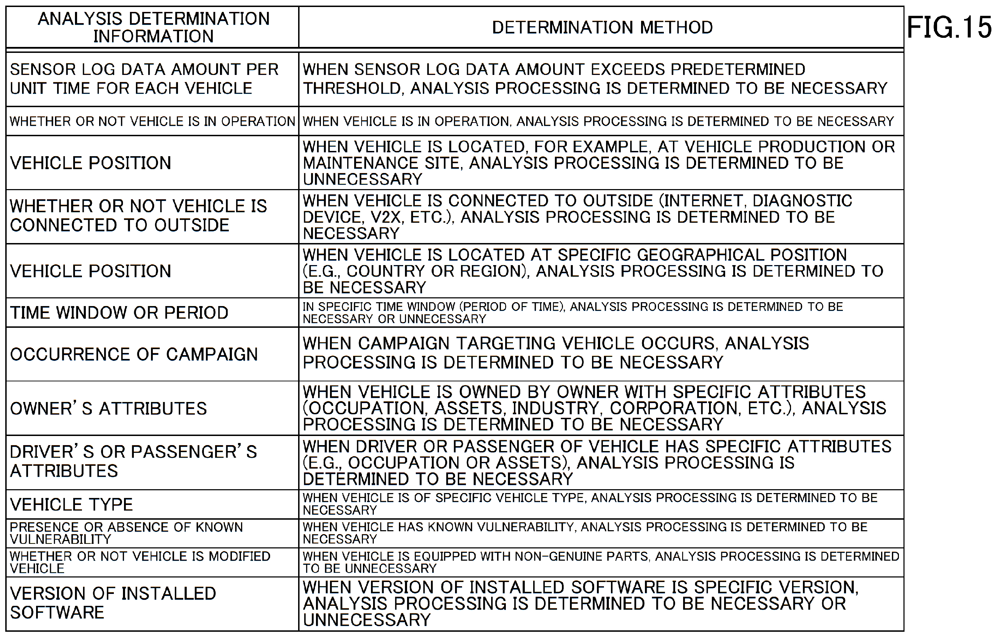

The analysis determination information described in the first and second embodiments is an example. For example, the vehicle security analysis system 1 may determine whether or not to analyze the log data 31 acquired by the acquisition unit 401 using various other analysis determination information illustrated in FIG. 15.

FIG. 15 is a diagram illustrating another example of the analysis determination information according to the present embodiment. As an example, the vehicle security analysis system 1 may use "SENSOR LOG DATA AMOUNT PER UNIT TIME FOR EACH VEHICLE" as the analysis determination information, as illustrated in FIG. 15. In this case, the management unit 402 manages the "SENSOR LOG DATA AMOUNT" in association with the vehicle identification information of each vehicle 20, instead of the "NUMBER OF OCCURRENCES OF SENSOR LOGS" of the analysis determination information illustrated in FIG. 7B. When the "SENSOR LOG DATA AMOUNT" of the analysis determination information is equal to or more than a threshold, the determination unit 403 determines that analysis of the log data 31 acquired by the acquisition unit 401 is necessary. Conversely, when the "SENSOR LOG DATA AMOUNT" of the analysis determination information is less than the threshold, the determination unit 403 determines that analysis of the log data 31 acquired by the acquisition unit 401 is unnecessary. Note that the threshold may be not only an absolute value but also a statistical quantity (e.g., a variance).

As another example, the vehicle security analysis system 1 may use "WHETHER OR NOT VEHICLE IS IN OPERATION" as the analysis determination information, as illustrated in FIG. 15. In this case, the management unit 402 may acquire information indicating whether or not the vehicle 20 is in operation, for example, from an external vehicle management system configured to manage the state of the vehicle 20, or from the vehicle 20. Alternatively, the management unit 402 may acquire, from the log data 31, information indicating whether or not the vehicle 20 is in operation. Further, when the vehicle 20 is in operation, the determination unit 403 determines that analysis of the log data 31 acquired by the acquisition unit 401 is necessary. Conversely, when the vehicle 20 is not in operation, the determination unit 403 determines that analysis of the log data 31 acquired by the acquisition unit 401 is unnecessary. This is based on the premise that, even if the vehicle 20 not in operation is attacked, the influence of the attack does not threaten the driver's life, i.e., the attack is acceptable.

As another example, the vehicle security analysis system 1 may use "VEHICLE POSITION" as the analysis determination information, as illustrated in FIG. 15. In this case, the management unit 402 may acquire position information indicating the position of the vehicle 20, for example, from an external vehicle management system configured to manage the state of the vehicle 20, or from the vehicle 20. Alternatively, the management unit 402 may acquire, from the log data 31, the position information indicating the position of the vehicle 20.

For example, when the vehicle 20 is located at a production site, a maintenance site, or the like for the vehicle 20, the determination unit 403 may determine that analysis of the log data 31 acquired by the acquisition unit 401 is unnecessary. This is based on the premise that, even if the vehicle 20 not in operation is attacked, the influence of the attack does not threaten the driver's life, i.e., the attack is acceptable. Also, it is assumed that various log data 31 that does not occur in normal use occurs during production or maintenance.

Alternatively, when the vehicle 20 is located at a predetermined position (e.g., a country or region), the determination unit 403 may determine that analysis of the log data 31 acquired by the acquisition unit 401 is necessary. This is based on the premise that there is locality in the presence or absence of an attack.

As another example, the vehicle security analysis system 1 may use "WHETHER OR NOT VEHICLE IS CONNECTED TO OUTSIDE" as the analysis determination information, as illustrated in FIG. 15. In this case, the management unit 402 may acquire information indicating whether or not the vehicle 20 is connected to an external network (e.g., the Internet or V2X) or an external device (e.g., a diagnostic device), for example, from an external vehicle management system configured to manage the state of the vehicle 20, or from the vehicle 20. Alternatively, the management unit 402 may acquire, from the log data 31, information indicating whether or not the vehicle 20 is connected to the outside from the log data 31. Note that V2X means "Vehicle to everything", and is a general term for techniques of mutual cooperation by performing communication between the vehicle 20 and other things (other vehicles, pedestrians, infrastructure, networks, etc.). In this case, when the vehicle 20 is connected to the outside, the determination unit 403 may determine that analysis of the log data 31 acquired by the acquisition unit 401 is necessary. This is based on the premise that attacks on the vehicle 20 are mainly threats from the outside, and other threats are acceptable.

As another example, the vehicle security analysis system 1 may use "TIME WINDOW OR PERIOD" as the analysis determination information, as illustrated in FIG. 15. In this case, the determination unit 403 may determine that analysis of the log data 31 acquired by the acquisition unit 401 is necessary (or unnecessary) within a specific time window or period. This is based on the premise that an attack on the vehicle 20 is likely (or unlikely) to occur during a specific time window or a specific period (e.g., during a long holiday period).

As another example, the vehicle security analysis system 1 may use "OCCURRENCE OF CAMPAIGN" as the analysis determination information, as illustrated in FIG. 15. Here, the campaign includes, for example, information indicating that an attack on a specific vehicle type or the like has occurred. In this case, the management unit 402 may acquire information indicating the presence or absence of the occurrence of the campaign, for example, from the external server 50 or the SIRT server 40. Further, when the campaign occurs in a vehicle type or the like corresponding to the vehicle 20, the determination unit 403 may determine that analysis of the log data 31 acquired by the acquisition unit 401 is necessary. Similarly, the vehicle security analysis system 1 may use "VEHICLE TYPE" as the analysis determination information.

As another example, the vehicle security analysis system 1 may use "OWNER'S ATTRIBUTES" as the analysis determination information, as illustrated in FIG. 15. In this case, when the vehicle 20 is owned by an owner having a specific attribute, the determination unit 403 may determine that analysis of the log data 31 acquired by the acquisition unit 401 is necessary. This is based on the premise that an attack targeting an owner having a specific attribute occurs. Similarly, the vehicle security analysis system 1 may use "DRIVER'S OR PASSENGER'S ATTRIBUTES" as the analysis determination information.

As another example, the vehicle security analysis system 1 may use "PRESENCE OR ABSENCE OF KNOWN VULNERABILITY" as the analysis determination information, as illustrated in FIG. 15. In this case, when the vehicle 20 has a known vulnerability, the determination unit 403 may determine that analysis of the log data 31 acquired by the acquisition unit 401 is necessary.

As another example, the vehicle security analysis system 1 may use "WHETHER OR NOT VEHICLE IS MODIFIED VEHICLE" as the analysis determination information, as illustrated in FIG. 15. In this case, when the vehicle 20 is a modified vehicle, the determination unit 403 may determine that analysis of the log data 31 acquired by the acquisition unit 401 is unnecessary. This is based on the assumption that the vehicle 20 having a configuration different from a standard configuration lowers a success rate of an attack. Also, it is conceivable that a modified vehicle is not subject to analysis by the vehicle security analysis system 1.

As another example, the vehicle security analysis system 1 may use "VERSION OF INSTALLED SOFTWARE" as the analysis determination information, as illustrated in FIG. 15. In this case, when the version of software installed in the vehicle 20 is a specific version, the determination unit 403 may determine that analysis of the log data 31 acquired by the acquisition unit 401 is necessary (or unnecessary).

The vehicle security analysis system 1 may determine whether analysis of the log data 31 acquired by the acquisition unit 401 is necessary or unnecessary by combining a plurality of items of the analysis determination information.

### [Third Embodiment]

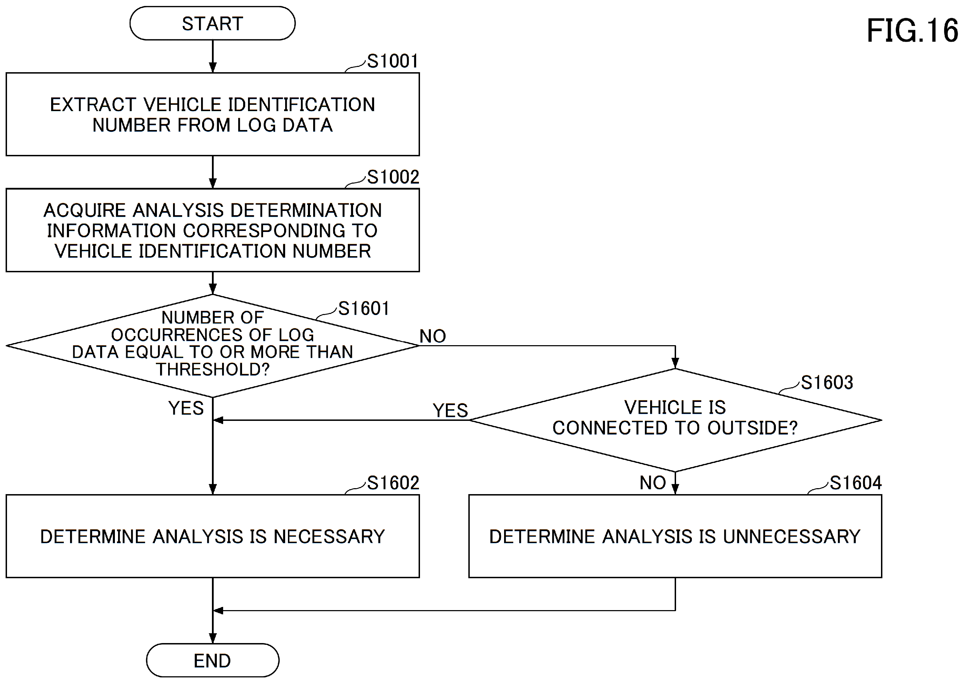

FIG. 16 is a flowchart illustrating an example of determination processing according to a third embodiment. This processing illustrates an example of analysis processing when the analysis determination information is two items, i.e., "NUMBER OF OCCURRENCES OF LOG DATA" and "WHETHER OR NOT VEHICLE IS CONNECTED TO OUTSIDE".

Note that processing of the SOC server according to the third embodiment may be the same as the processing of the SOC server according to the first embodiment described with reference to FIG. 8. Also, management processing according to the third embodiment may be the same as the management processing according to the first embodiment described with reference to FIG. 9. Further, analysis processing according to the third embodiment may be the same as the analysis processing according to the first embodiment described with reference to FIG. 11.

Also, since the processing of steps S1001 and S1002 in FIG. 16 is the same as the determination processing according to the first embodiment described with reference to FIG. 10, a description thereof is omitted here. Further, a detailed description of contents of the processing similar to the determination processing according to the first embodiment is omitted here.

In step S1601, the determination unit 403 determines whether or not the number of occurrences of the log data indicated by the acquired analysis determination information is equal to or more than a predetermined threshold. When the number of occurrences of the log data 31 is equal to or more than the threshold, the determination unit 403 moves the processing to step S1602. Conversely, when the number of occurrences of the log data 31 is less than the threshold, the determination unit 403 moves the processing to step S1603.

In step S1602, the determination unit 403 determines that analysis of the log data 31 acquired by the acquisition unit 401 is necessary.

In step S1603, the determination unit 403 determines whether or not the vehicle 20 is connected to the outside (an external network or an external device). When the vehicle 20 is connected to the outside, the determination unit 403 moves the processing to step S1602. Conversely, when the vehicle 20 is not connected to the outside, the determination unit 403 moves the processing to step S1604.

In step S1604, the determination unit 403 determines that analysis of the log data 31 acquired by the acquisition unit 401 is unnecessary.

In this manner, the determination unit 403 may determine whether or not analysis of the log data 31 acquired by the acquisition unit 401 is necessary by combining a plurality of items of the analysis determination information.

As described above, according to the present embodiment, in the vehicle security analysis system 1 configured to acquire and analyze sensor log data relating to the in-vehicle device 21 mounted on the vehicle 20, resources required for analysis processing of sensor log data can be readily reduced.

### <Summary of Embodiments>

The present specification discloses, at least, a vehicle security analysis system, a vehicle security analysis method, and a program, which are described in the following clauses.

### (Clause 1)

A vehicle security analysis system, including:
an acquisition unit configured to acquire sensor log data relating to an in-vehicle device mounted on a vehicle;
an analysis unit configured to selectively analyze the sensor log data required to be analyzed, among the sensor log data acquired by the acquisition unit, based on analysis determination information corresponding to the vehicle; and
an output unit configured to output an analysis result obtained by the analysis unit.

### (Clause 2)

The vehicle security analysis system according to clause 1, further including:
a determination unit configured to, in a case in which the acquisition unit acquires the sensor log data, determine whether or not to analyze the sensor log data acquired by the acquisition unit, based on the analysis determination information and the sensor log data.

### (Clause 3)

The vehicle security analysis system according to clause 1 or 2, wherein
the analysis determination information includes information indicating a state of the vehicle, and
the vehicle security analysis system further includes a determination unit configured to determine whether or not to analyze the sensor log data acquired by the acquisition unit, based on the state of the vehicle.

### (Clause 4)

The vehicle security analysis system according to any one of clauses 1 to 3, wherein
the analysis determination information includes information indicating a number of occurrences of the sensor log data in the vehicle, and
in a case in which the number of occurrences does not reach a threshold, the analysis unit is further configured not to analyze the sensor log data acquired by the acquisition unit.

### (Clause 5)

The vehicle security analysis system according to any one of clauses 1 to 4, wherein
in a case in which the vehicle is not in operation, the analysis unit is further configured not to analyze the sensor log data acquired by the acquisition unit.

### (Clause 6)

The vehicle security analysis system according to any one of clauses 1 to 3, wherein
in a case in which the vehicle is connected to an external network or an external device, the analysis unit is further configured to analyze the sensor log data acquired by the acquisition unit.

### (Clause 7)

The vehicle security analysis system according to any one of clauses 1 to 3, wherein
in a case in which the vehicle has a known vulnerability, the analysis unit is further configured to analyze the sensor log data acquired by the acquisition unit.

### (Clause 8)

The vehicle security analysis system according to any one of clauses 1 to 3, wherein
in a case in which an attack on another vehicle of a type that is the same as a type of the vehicle occurs, the analysis unit is further configured to analyze the sensor log data acquired by the acquisition unit.

### (Clause 9)

A vehicle security analysis method executed by a computer, the vehicle security analysis method including:
acquisition processing of acquiring sensor log data relating to an in-vehicle device mounted on a vehicle;
analysis processing of selectively analyzing the sensor log data required to be analyzed, among the sensor log data acquired through the acquisition processing, based on analysis determination information corresponding to the vehicle; and
output processing of outputting an analysis result obtained through the analysis processing.

### (Clause 10)

A program causing a computer to execute:
acquisition processing of acquiring sensor log data relating to an in-vehicle device mounted on a vehicle;
analysis processing of selectively analyzing the sensor log data required to be analyzed, among the sensor log data acquired through the acquisition processing, based on analysis determination information corresponding to the vehicle; and
output processing of outputting an analysis result obtained through the analysis processing.

Although the embodiments of the present invention have been described above in detail, various modifications and applications of the present invention are possible within the scope of the claims.

This application claims priority to Basic Application No. 2023-186501, filed with the Japan Patent Office on October 31, 2023, the entire contents of which are hereby incorporated by reference.

### REFERENCE SIGNS LIST

- .1: Vehicle security analysis system
- 10: SOC server (vehicle security analysis device)
- 20: Vehicle
- 21,21a,21b: In-vehicle device
- 31: Log data (sensor log data)
- 300: Computer
- 401: Acquisition unit
- 402: Management unit
- 403: Determination unit
- 404: Analysis unit
- 405: Output unit
- 411: Analysis determination information DB
- 412: Analysis logic DB
- 701,702,1201: Analysis determination information

## Claims

1. A vehicle security analysis system, comprising:
an acquisition unit configured to acquire sensor log data relating to an in-vehicle device mounted on a vehicle;
an analysis unit configured to selectively analyze the sensor log data required to be analyzed, among the sensor log data acquired by the acquisition unit, based on analysis determination information corresponding to the vehicle; and
an output unit configured to output an analysis result obtained by the analysis unit.

2. The vehicle security analysis system according to claim 1, further comprising:
a determination unit configured to, in a case in which the acquisition unit acquires the sensor log data, determine whether or not to analyze the sensor log data acquired by the acquisition unit, based on the analysis determination information and the sensor log data.

3. The vehicle security analysis system according to claim 1, wherein
the analysis determination information includes information indicating a state of the vehicle, and
the vehicle security analysis system further includes a determination unit configured to determine whether or not to analyze the sensor log data acquired by the acquisition unit, based on the state of the vehicle.

4. The vehicle security analysis system according to claim 1, wherein
the analysis determination information includes information indicating a number of occurrences of the sensor log data in the vehicle, and
in a case in which the number of occurrences does not reach a threshold, the analysis unit is further configured not to analyze the sensor log data acquired by the acquisition unit.

5. The vehicle security analysis system according to any one of claims 1 to 4, wherein
in a case in which the vehicle is not in operation, the analysis unit is further configured not to analyze the sensor log data acquired by the acquisition unit.

6. The vehicle security analysis system according to any one of claims 1 to 4, wherein
in a case in which the vehicle is connected to an external network or an external device, the analysis unit is further configured to analyze the sensor log data acquired by the acquisition unit.

7. The vehicle security analysis system according to any one of claims 1 to 4, wherein
in a case in which the vehicle has a known vulnerability, the analysis unit is further configured to analyze the sensor log data acquired by the acquisition unit.

8. The vehicle security analysis system according to any one of claims 1 to 4, wherein
in a case in which an attack on another vehicle of a type that is the same as a type of the vehicle occurs, the analysis unit is further configured to analyze the sensor log data acquired by the acquisition unit.

9. A vehicle security analysis method executed by a computer, the vehicle security analysis method comprising:
acquisition processing of acquiring sensor log data relating to an in-vehicle device mounted on a vehicle;
analysis processing of selectively analyzing the sensor log data required to be analyzed, among the sensor log data acquired through the acquisition processing, based on analysis determination information corresponding to the vehicle; and
output processing of outputting an analysis result obtained through the analysis processing.

10. A program causing a computer to execute:
acquisition processing of acquiring sensor log data relating to an in-vehicle device mounted on a vehicle;
analysis processing of selectively analyzing the sensor log data required to be analyzed, among the sensor log data acquired through the acquisition processing, based on analysis determination information corresponding to the vehicle; and
output processing of outputting an analysis result obtained through the analysis processing.
